(19) Europäisches Patentamt
European Patent Office
Office européen des brevets

(11) **EP 3 680 980 B1**

(12) **EUROPEAN PATENT SPECIFICATION**

(45) Date of publication and mention of the grant of the patent:
**14.08.2024  Bulletin 2024/33**

(21) Application number: **18873239.0**

(22) Date of filing: **05.10.2018**

(51) International Patent Classification (IPC):
$H01M\ 10/12^{(2006.01)}$     $H01M\ 4/62^{(2006.01)}$
$H01M\ 4/56^{(2006.01)}$      $H01M\ 50/466^{(2021.01)}$
$H01M\ 50/46^{(2021.01)}$     $H01M\ 50/417^{(2021.01)}$
$H01M\ 50/446^{(2021.01)}$    $H01M\ 50/431^{(2021.01)}$
$H01M\ 4/02^{(2006.01)}$

(52) Cooperative Patent Classification (CPC):
**H01M 4/56; H01M 4/625; H01M 10/12;
H01M 50/417; H01M 50/431; H01M 50/446;
H01M 50/46; H01M 50/463; H01M 50/466;**
H01M 10/121; H01M 2004/027; Y02E 60/10;
Y02P 70/50

(86) International application number:
**PCT/JP2018/037302**

(87) International publication number:
**WO 2019/087683 (09.05.2019 Gazette 2019/19)**

(54) **LEAD-ACID BATTERY**

BLEI-SÄURE-BATTERIE

BATTERIE AU PLOMB-ACIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2017   JP 2017211369**

(43) Date of publication of application:
**15.07.2020   Bulletin 2020/29**

(73) Proprietor: **GS Yuasa International Ltd.
Kyoto-shi, Kyoto 601-8520 (JP)**

(72) Inventors:
  • **WADA, Hidetoshi
    Kyoto-shi
    Kyoto 601-8520 (JP)**
  • **INAGAKI, Satoshi
    Kyoto-shi
    Kyoto 601-8520 (JP)**
  • **KYO, Masaaki
    Kyoto-shi
    Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
**JP-A- 2016 154 131     JP-A- 2017 033 662
JP-A- 2017 063 001**

  • **No further relevant documents disclosed**

**Description**

TECHNICAL FIELD

The present invention relates to a lead-acid battery.

BACKGROUND ART

Lead-acid batteries are being used for various uses in addition to in-vehicle and industrial uses. The lead-acid battery includes an electrode group provided with a negative electrode plate, a positive electrode plate, a separator interposed between the negative electrode plate and the positive electrode plate, and an electrolyte solution. The negative electrode plate includes a current collector and a negative electrode material. The negative electrode material includes a negative active material, a carbon material, and the like.

Patent Document 1 proposes adding flaky graphite to a negative active material.

On the other hand, a separator having a rib may be used as the separator (e.g., Patent Documents 1 and 2).

PRIOR ART DOCUMENTS

PATENT DOCUMENTS

Patent Document 1: WO 2011/142072 A

SUMMARY OF THE INVENTION

PROBLEMS TO BE SOLVED BY THE INVENTION

The lead-acid battery is sometimes used in a poor charged state called a partial state of charge (PSOC). For example, in a charge control vehicle or an idling stop (IS) vehicle, a lead-acid battery is used in the PSOC. Therefore, the lead-acid battery is required to be excellent in life performance in a cycle test under PSOC conditions (hereinafter referred to as PSOC life performance).

It has been known that the addition of graphite to the negative electrode material improves PSOC life performance and charge acceptability to some extent, but in recent years, further improvement in PSOC life performance has been required.

MEANS FOR SOLVING THE PROBLEMS

One aspect of the present invention relates to a lead-acid battery according to appended claim 1.

ADVANTAGES OF THE INVENTION

In a lead-acid battery using the negative electrode material containing graphite particles, the PSOC life performance can be improved greatly.

BRIEF DESCRIPTION OF THE DRAWINGS

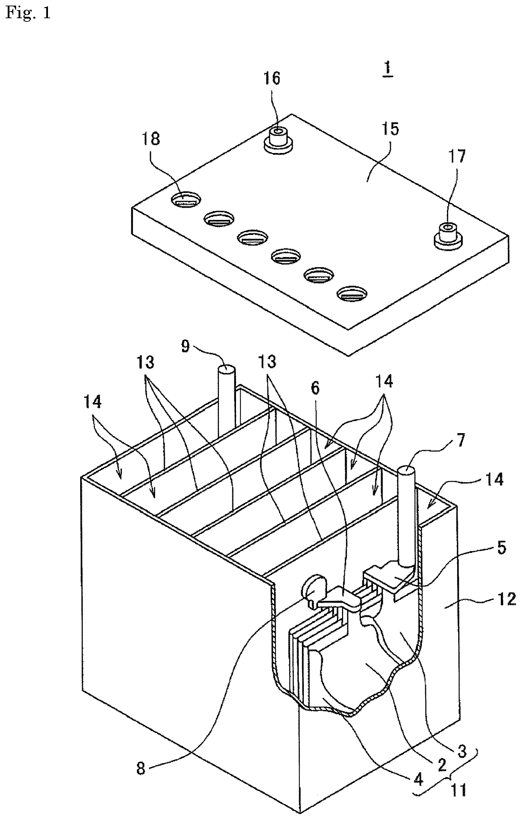

Fig. 1 is an exploded perspective view showing an external appearance and an internal structure of a lead-acid battery, which is partially cut off, according to one aspect of the present invention.

MODES FOR CARRYING OUT THE INVENTION

A lead-acid battery according to one aspect of the present invention includes a positive electrode plate, a negative electrode plate, a separator interposed between the positive electrode plate and the negative electrode plate, and an electrolyte solution. The separator includes a rib (first rib) on at least the negative electrode plate side. The negative electrode plate contains a negative electrode material, and the negative electrode material contains graphite particles.

Conventionally, conductive carbon particles such as carbon black and graphite particles have been added to the negative electrode material from the viewpoint of enhancing the conductivity of the negative electrode material. However, there has been found to be a case where, even when the graphite particles are used, the supply of ions necessary for the electrode reaction during charge and discharge to the negative electrode material and the release of the ions from the negative electrode material are prevented, and the effect of improving the PSOC life performance by the use of graphite particles cannot be obtained sufficiently. It is conceivable that this is because the particle size of the graphite particles is larger than that of carbon black or the like, and hence the graphite particles become barriers when ions are supplied to or released from the negative electrode material. Furthermore, in a case where the battery is continuously used in a poor charged state such as PSOC, when the distance between the separator and the negative electrode plate is small, the space between the separator and the negative electrode plate locally comes into an overdischarged state, and the amount of ions in the electrolyte solution between the separator and the negative electrode plate is locally decreased. It is thus conceivable that in a case where the graphite particles are used as the negative electrode material, when the distance between the separator and the negative electrode plate is small, the ion-supply property to the negative electrode material and the ion-release property from the negative electrode material are significantly decreased, and the effect of improving the PSOC life performance cannot be obtained sufficiently.

According to the above aspect of the present invention, graphite particles are used as the negative electrode material, and the separator having a first rib on the negative electrode plate side is used. By such a combination, it is possible to ensure high ion-supply property to the negative electrode material and high ion-release property from the negative electrode material, and to ensure a conductive network in the negative electrode material over a long period of time. This enables significant improvement in PSOC life performance.

More specifically, first, according to the above aspect, the first rib is provided on the negative electrode plate side of the separator, so that the electrolyte solution can be ensured near the negative electrode plate. It is thereby possible to ensure the amount of ions in the electrolyte solution between the separator and the negative electrode plate, and further to improve the ion-exchange rate required for the electrode reaction during charge and discharge Thus, even when the supply and release of ions are easily hindered by the graphite particles, the efficiency of supply of ions to the negative electrode material and release of ions from the negative electrode material is enhanced, and high ion-supply property in the negative electrode material and release performance can be ensured. Next, as compared to carbon black or the like, the graphite particles hardly flow into the electrolyte solution during charge and discharge, whereby a conductive network in the negative electrode material can be ensured over a long period of time. Further, the diffusivity of the electrolyte solution near the negative electrode plate can be enhanced by the first rib. Thereby, the accumulation of lead sulfate is prevented. It is conceivable that such a mechanism can ensure high PSOC life performance.

The average height of the first rib is preferably 0.05 mm or more. In this case, the electrolyte solution can be easily ensured near the negative electrode plate, so that the effect of improving the ion-exchange rate and the effect of preventing the accumulation of lead sulfate can be further enhanced. It is thus advantageous in enhancing the PSOC life performance.

The separator preferably has a region in which the average pitch of the first ribs is 0.2 mm or more and 12 mm or less. In this case, the electrolyte solution can be easily ensured near the negative electrode plate, so that the effect of improving the ion-exchange rate and the effect of preventing the accumulation of lead sulfate can be further enhanced.

The average particle size of the graphite particles is preferably 50 pm or more and 300 pm or less. When the average particle size is 50 pm or more, the effect of preventing the accumulation of lead sulfate due to the excellent electron conductivity of graphite is more easily obtained. When the average particle size is 300 pm or less, higher ion-supply property and ion-release property can be ensured by the first rib. This can further improve the PSOC life performance.

The content of the graphite particles in the negative electrode material is preferably 0.2% by mass or more and 3% by mass or less. In this case, a high ion-supply property and a high ion-release property can be easily ensured, and the conductive network can be easily spread in the negative electrode material, whereby it is possible to further enhance the effect of improving the PSOC life performance.

It is preferable that the separator further include a rib (second rib) on the positive electrode plate side as well. In this case, the diffusivity of the electrolyte solution is increased even near the positive electrode plate, and the oxidation degradation of the separator can be prevented, so that it is more advantageous in improving the PSOC life.

The average height of the first rib is preferably 0.30 mm or less. When the average height of the first ribs is in such a range, a certain degree of height for the second ribs is easily ensured, which can facilitate ensuring the electrolyte solution near the positive electrode plate as well and further enhancing the effect of preventing the oxidation degradation of the separator.

The separator may have a bag shape. When the bag-shaped separator is used, the electrolyte solution easily stays, but by providing the rib on the separator, the diffusivity of the electrolyte solution can be enhanced. When the positive electrode plate is stored in the bag-shaped separator, the sulfuric acid released from the positive electrode plate during charge is hardly released to the outside of the bag-shaped separator, whereby the effect of preventing the stratification due to the sedimentation of sulfuric acid is enhanced, and hence the PSOC life performance is further improved. When the bag-shaped separator stores the negative electrode plate, by the formation of the first rib in the bag, the diffusivity of the electrolyte solution in the bag is easily increased, so that the ion-exchange rate is improved, and the effect of preventing the accumulation of lead sulfate can be enhanced. Unlike the positive electrode current collector, the negative electrode current collector has a small extension during charge-discharge. Therefore, when the negative electrode plate is stored in the bag-shaped separator, the separator is prevented from breaking due to the extension of the current collector, and a short circuit can thus be prevented.

Hereinafter, the lead-acid battery according to one embodiment of the present invention will be described for each of the main components, but the present invention is not limited to the following embodiment.

(Negative electrode plate)

The negative electrode plate of the lead-acid battery includes a negative electrode material. Normally, the negative electrode plate is made up of a negative electrode current collector and a negative electrode material. Note that the negative electrode material is obtained by removing the negative electrode current collector from the negative electrode plate. The negative electrode current collector may be formed by casting lead (Pb) or a lead alloy or may be formed by processing a lead or lead alloy sheet. Examples of the processing method include an expanding process and a punching process. The use of a negative electrode grid as the negative electrode current collector is preferred because the negative electrode material is easily supported.

The lead alloy used for the negative electrode current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative electrode material contains graphite particles (first carbonaceous material). Further, the negative electrode material contains a negative active material (lead or lead sulfate) that develops a capacity through an oxidation-reduction reaction. The negative electrode material may contain an expander, a carbonaceous material (second carbonaceous material) other than graphite particles, barium sulfate, and the like, and may contain other additives as necessary. Note that the negative active material in a charged state is spongy lead, whereas a non-chemically converted negative electrode plate is usually produced using lead powder.

As graphite particles, any carbonaceous material including a graphite type crystal structure may be used, and either artificial graphite or natural graphite may be used. Examples of the shape of the graphite particles include a spherical shape, an elliptical spherical shape, a scale shape, and a flake shape. Graphite particles in a flat shape such as a scale or flake shape can easily inhibit the supply and release of ions in the negative electrode material, but the first rib can enhance the ion-exchange rate. Therefore, even when such graphite particles are used, excellent PSOC life performance can be ensured.

The average particle size of the graphite particles is, for example, 5 pm or more, and preferably 50 pm or more. The average particle size of the graphite particles is, for example, 1 mm or less, preferably 500 pm or less (e.g., 400 pm or less), and more preferably 300 pm or less. Any combination of these lower and upper limits is possible. Graphite particles having such a size easily inhibit the supply and release of ions in the negative electrode material, but the first rib can increase the ion-exchange rate. Therefore, even when graphite particles of such a size are used, excellent PSOC life performance can be ensured. In particular, when the negative electrode material contains graphite particles having an average particle size of 50 pm or more and 300 pm or less, the effect of preventing the accumulation of lead sulfate can be enhanced, and a high ion-exchange rate can be further easily ensured. Therefore, the PSOC life performance can be further enhanced.

The content of the graphite particles in the negative electrode material is, for example, 0.1 mass% or more and 5 mass% or less, preferably 0.2 mass% or more and 5 mass% or less, and more preferably 0.2 mass% or more and 3 mass% or less. When the content of the graphite particles is in such a range, the supply of ions to the negative electrode material and the release of ions from the negative electrode material can be prevented from being hindered, and a conductive network is easily spread in the negative electrode material. Hence it is more advantageous in ensuring high PSOC life performance.

Examples of other carbonaceous materials (second carbonaceous materials) include carbon black. Examples of the carbon black include acetylene black, furnace black, channel black, and lamp black. The negative electrode material may contain one kind of the second carbonaceous material or two or more kinds thereof.

The content of the graphite particles contained in the negative electrode material and the average particle size of the graphite particles can be obtained as follows.

A chemically converted lead-acid battery after full charge is disassembled, and a negative electrode plate is washed with water and dried to remove sulfuric acid, and then dried under vacuum (under pressure lower than atmospheric pressure). Next, an electrode material is collected from the negative electrode plate and crushed. 30 mL of a nitric acid aqueous solution with a concentration of 60% by mass is added to 5 g of the crushed sample, and heated at 70°C to dissolve lead as lead nitrate. To this mixture, 10 g of disodium ethylenediaminetetraacetate, 30 mL of aqueous ammonia with a concentration of 28% by mass, and 100 mL of water are further added, and heating is continued to dissolve soluble matter. Next, the sample collected by filtration is sieved through a sieve having an opening of 1000 pm to remove components having a large size such as a reinforcing material, and the component having passed through the sieve is collected as a carbonaceous material.

The collected liquid containing the carbonaceous material is sieved through a sieve having an opening of 32 pm and then sieved through a sieve having an opening of 5 pm to remove carbon particles mainly composed of the second carbonaceous material such as carbon black and having a small particle size. The material remaining on each of the sieves having the openings of 32 pm and 5 pm is collected and dried at a temperature of 110°C for two hours. Then, when a strength ratio $I_D/I_G$ of an intensity $I_D$ of a peak (D band) appearing in the range of 1300 $cm^{-1}$ or more and 1400 $cm^{-1}$ or less and an intensity $I_G$ of peak (G band) appearing in the range of 1550 $cm^{-1}$ or more and 1620 $cm^{-1}$ or less is 0 or more and 0.9 or less as Raman spectrums of dried carbon particles, the obtained carbon particles are defined as the graphite particles (first carbonaceous material) in the above aspect of the present invention.

The content of the graphite particles in the negative electrode material is obtained by measuring the mass of the graphite particles separated by the above procedure, and calculating the ratio (% by mass) of the mass in 5 g of the crushed sample.

The average particle size of the graphite particles is obtained from a volume-based particle size distribution measured using a laser diffraction/scattering type particle size distribution measuring device. "SALD-2000J" manufactured by Shimadzu Corporation is used as the laser diffraction/scattering type particle size distribution measuring device. The average particle size of the graphite particles is measured in a state where the dried graphite particles are dispersed in water.

A procedure for calculating the average particle size of the graphite particles will be specifically described as follows: first, 250 mL of ion-exchange water is put into a stirring tank, 20 mg of dried graphite particles is charged, a pump rate is maximized, and ultrasonic vibration is added, to bring the graphite particles into the state of being prevented from agglomerating. Then, in this state, the particle size distribution is measured seven minutes after the start of stirring. The particle size distribution is expressed on the basis of volume frequency. It can be said that the particle size distribution is stable seven minutes after the start of stirring.

In the measurement using SALD-2000J, the measurement interval of the particle size distribution is an interval obtained by dividing the measured particle size range on a logarithmic scale. In this case, the average particle size is represented by $10^{\mu}$ (i.e., 10 to the power of $\mu$) using each average value p on a logarithmic scale represented by the following equation. The unit of the measured particle size and the unit of the average primary particle size represented by $10^{\mu}$ are the same. For example, when the measured particle size is in the unit of $\mu$m, the average primary particle size represented by $10^{\mu}$ is also in the unit of $\mu$m.

[Equation 1]

$$\mu = \frac{1}{100} \sum_{j=1}^{n} q_j \left( \frac{log_{10}\chi_j + log_{10}\chi_{j+1}}{2} \right)$$

(where n: the number of divisions of the measured particle size range, j: a natural number, $\chi_j$: a particle size of a measurement target ($\chi_j$: the maximum particle size, $\chi_{n+1}$: the minimum particle size), and $q_j$: a relative particle size (difference %) in a particle size section ($\chi_j$, $\chi_{j+1}$).

The lower limit of the measurement particle size range is 0.05 $\mu$m or less, and the upper limit thereof is 700 pm or more. The number of divisions n of the measurement particle size range is 40 or more. The measurement of the particle size distribution is performed at equally spaced measurement intervals on a logarithmic scale.

In the present specification, the fully charged state of the lead-acid battery is a state where in the case of a flooded-type battery, after constant current charge is performed at a current of 0.2 CAin a water tank at 25°C until reaching 2.5 V/cell, the constant current charge is further performed at 0.2 CA for two hours. In the case of a valve regulated battery, the fully charged state is a state where a constant current constant voltage charge of 2.23 V/cell is performed at 0.2 CAin an air tank at 25°C, and the charge is ended at the point when the charge current at the time of constant voltage charge becomes 1 mCA or lower.

In the present specification, 1 CA is a current value (A) having the same numerical value as the nominal capacity (Ah) of the battery. For example, when the battery has a nominal capacity of 30 Ah, 1 CAis 30 A, and 1 mCA is 30 mA.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to the lead powder, the organic expander, and various additives if necessary, and mixing these. In the curing step, it is preferable to cure the non-chemically converted negative electrode plate at a temperature higher than room temperature and with high humidity.

The chemical conversion can be performed by charging the electrode group in a state where the electrode group including the non-chemically converted negative electrode plate is immersed in the electrolyte solution containing sulfuric acid in the container of the lead-acid battery. However, the chemical conversion may be performed before the lead-acid battery or the electrode group is assembled. The chemical conversion produces spongy lead.

(Separator)

The separator includes a base made of a microporous film, and a rib protruding from at least one main surface of the base. The separator may include the rib protruding from one main surface of the base and a rib protruding from the other main surface of the base. The separator at least includes the rib protruding from one main surface and is disposed such that this rib is located on the negative electrode plate side. The rib located on the negative electrode plate side is called a first rib. When the separator includes the rib protruding from the other main surface of the base, this rib is disposed on the positive electrode plate side (i.e., so as to face the positive electrode plate). The rib located on the positive electrode plate side is called a second rib. The first rib can ensure the electrolyte solution near the negative electrode plate to enhance the ion-exchange rate, and can enhance the diffusivity of the electrolyte solution near the negative electrode plate to prevent the accumulation of lead sulfate, so that it is possible to further improve the PSOC life performance.

The separator is formed using a polymer material (but different from fibers). At least the base is a porous sheet and can also be called a porous film. The separator may include a filler (e.g., a particulate filler such as silica, and/or a fibrous filler) that is dispersed in a matrix formed using a polymer material. The separator is preferably made of a polymer material having acid resistance. As such a polymer material, a polyolefin such as polyethylene or polypropylene is preferred.

It is assumed that, similarly to the above, the average thickness of the base, the average height of the ribs, and the average pitch of the ribs to be described below are obtained for a separator taken out of a chemically converted lead-acid battery after full charge, washed, and vacuum-dried (dried under pressure lower than atmospheric pressure).

The average thickness of the base is, for example, 100 pm or more and 300 pm or less, and preferably 150 pm or more and 250 pm or less. When the average thickness of the base is in such a range, the height of the first rib, and as necessary, the height of the second rib, are easily ensured while high charge-discharge characteristics are ensured.

The average thickness of the base is obtained by measuring the thickness of the base at five freely selected locations in a cross-sectional photograph of the separator and averaging the measured thickness.

The first rib is formed on the surface of the separator facing the negative electrode plate. The average height of the first rib is 0.05 mm or more, more preferably 0.06 mm or more, and may be 0.10 mm or more. When the average height of the first ribs is in such a range, the electrolyte solution near the negative electrode plate is easily ensured, and the effect of improving the ion-exchange rate and the effect of preventing the accumulation of lead sulfate can be further enhanced. From the viewpoint of easily ensuring the height of the second rib while ensuring the charge-discharge characteristics, the average height of the first rib is 0.40 mm or less, preferably 0.30 mm or less, and more preferably 0.25 mm or less. Any combination of these lower and upper limits is possible. The separator is preferably formed with the first rib at such an average height in at least a region facing the negative electrode plate (preferably, a region where the negative electrode material is present). For example, the first rib having such an average height is preferably formed in 70% or more of the area of the region of the separator facing the negative electrode plate.

Note that the height of the first rib refers to a distance from one main surface of the base to the top of the first rib at a predetermined position of the first rib. In a case where the main surface of the base is not flat, the height of the first rib is assumed to be the distance from the highest position of one main surface of the base to the top of the first rib at a predetermined position of the first rib when the separator is placed flat with the first rib side facing up. The average height of the first ribs is obtained by averaging the heights of the first ribs measured at ten freely selected locations of the first ribs on one main surface of the base.

The pattern of the first rib on one main surface of the base is not particularly limited, and the first rib may be formed at random or may be formed in a stripe shape, a curved shape, a grid shape, or the like. From the viewpoint of making the electrolyte solution more easily diffused, it is preferable to form a plurality of first ribs on one main surface of the base so as to be arranged in stripes. The orientation of the stripe-shaped first ribs is not particularly limited, and for example, the plurality of first ribs may be formed along the height direction or the width direction of the negative electrode plate.

Note that a lug for extracting current from an electrode group is usually formed at one end of each of the negative electrode plate and the positive electrode plate. The vertical direction of the negative electrode plate or the positive electrode plate with the lug directed upward is referred to as the height direction of the negative electrode plate or the positive electrode plate. The width direction of the negative electrode plate or the positive electrode plate is a direction orthogonal to the height direction and crossing the main surface of the negative electrode plate or the positive electrode plate.

The average pitch of the striped or grid-shaped first ribs is preferably 0.2 mm or more and 12 mm or less, and more preferably 0.3 mm or more and 10 mm or less. When the separator includes a region in which the first ribs are formed at an average pitch in such a range, the electrolyte solution near the negative electrode plate is easily ensured, so that the effect of improving the ion-exchange rate and the effect of preventing the accumulation of lead sulfate can be further enhanced. Hence it is more advantageous in enhancing the PSOC life performance. In the separator, the first ribs are preferably formed at such an average pitch in a region facing the negative electrode plate (preferably, a region where the negative electrode material is present). For example, the first ribs having such an average pitch are preferably formed in 70% or more of the area of the region of the separator facing the negative electrode plate. In a region not facing the negative electrode plate or a region where the negative electrode material is not present, such as the end of the separator, the first rib may or may not be formed, and a plurality of first ribs may be formed densely (e.g., at an average pitch of 0.5 mm or more and 5 mm or less).

Note that the pitch of the first ribs is the distance between the tops of the adjacent first ribs (more specifically, the distance between the centers of the adjacent first ribs in a direction crossing the first ribs).

The average pitch of the first ribs is obtained by averaging the pitches of the first ribs measured at ten freely selected locations. When the first ribs are densely formed in the region of the separator not facing the negative electrode plate or the region facing a region where the negative electrode material of the negative electrode plate is not present, the average pitch may be calculated excluding this region. The average pitch of such partially densely formed first ribs can be calculated for this region, similarly to the above.

In particular, the average height and average pitch of the first ribs and the content of graphite particles in the negative electrode material greatly influence the improvement in ion velocity. From the viewpoint of ensuring a higher effect of improving the ion velocity, it is preferable that the average height of the first rib be 0.06 mm or more and 0.25 mm or less, the average pitch of the first rib be 0.3 mm or more and 10 mm or less, and the content of the graphite particles in the negative electrode material be 0.2% by mass or more and 3% by mass or less.

The second rib is formed on the surface of the separator facing the positive electrode plate. The average height of the second rib is 0.3 mm or more, and preferably 0.4 mm or more. When the average height of the second rib is within such a range, the oxidation degradation of the separator is easily prevented, and the electrolyte solution can be easily ensured near the positive electrode plate. From the viewpoint of ensuring a high capacity, the average height of the second rib is 1.0 mm or less, and may be 0.7 mm or less. Any combination of these lower and upper limits is possible. When the separator has the second rib, the second rib is preferably formed at such an average height in at least a region facing the positive electrode plate (preferably, a region where the positive electrode material is present). For example, the second rib having such an average height is preferably formed in 70% or more of the area of the region of the separator facing the positive electrode plate.

The average height of the second rib is obtained according to the case of the first rib. The height of the second rib refers to a distance from the other main surface of the base to the top of the second rib at a predetermined position of the second rib, according to the case of the first rib

The pattern and the orientation of the second rib are not particularly limited and may be selected, for example, from those described for the first rib. The average pitch of the stripe-shaped or grid-shaped second rib is, for example, 1 mm or more and 15 mm or less, and preferably 5 mm or more and 10 mm or less. When the separator includes a region in which the second ribs are formed at an average pitch in such a range, the effect of preventing the oxidation degradation of the separator is further enhanced. The separator is preferably formed with the second ribs at such an average pitch in a region facing the positive electrode plate (preferably, a region where the positive electrode material is present). For example, the second ribs having such an average pitch are preferably formed in 70% or more of the area of the region of the separator facing the positive electrode plate. In a region not facing the positive electrode plate or a region facing a region where the positive electrode material of the positive electrode plate is not present, such as the end of the separator, the second rib may or may not be formed, and a plurality of second ribs may be formed densely (e.g., at an average pitch of 0.5 mm or more and 5 mm or less).

Note that the pitch of the second ribs is the distance between the tops of the adjacent second ribs (more specifically, the distance between the centers of the adjacent second ribs in a direction crossing the second rib). The average pitch of the second ribs can be calculated according to the average pitch of the first ribs.

The sheet-shaped separator may be sandwiched between the negative electrode plate and the positive electrode plate, or by storing the negative electrode plate or the positive electrode plate in the bag-like separator, the separator may be interposed between the negative electrode plate and the positive electrode plate. When a bag-shaped separator is used, the electrolyte solution is hardly diffused, but the provision of the first rib and the second rib improves the diffusivity. When the positive electrode plate is stored in the bag-shaped separator, the stratification is easily prevented, and hence the PSOC life performance is further improved. When the bag-shaped separator stores the negative electrode plate, the first rib facilitates enhancing the effect of improving the ion-exchange rate near the negative electrode plate and the effect of preventing the accumulation of lead sulfate, and also prevents the breakage of the separator due to the extension of the current collector, thus enabling prevention of a short circuit caused by the extension.

The separator is obtained by, for example, extruding a resin composition containing a pore-forming additive (a solid pore-forming additive such as a polymer powder, and/or a liquid pore-forming additive such as an oil), a polymer material, and the like to be molded into a sheet shape, and then removing the pore-forming additive to form pores in the matrix of the polymer material. The rib may be formed, for example, at the time of the extrusion molding, or may be formed by performing the press with a roller having a groove corresponding to the rib after the molding into the sheet shape or the removal of the pore-forming additive. When a filler is used, the filler is preferably added to the resin composition.

(Positive electrode plate)

There are a paste type and a clad type in the positive electrode plate of the lead-acid battery.

The paste-type positive electrode plate includes a positive electrode current collector and a positive electrode material. The positive electrode material is held in the positive electrode current collector. In the paste-type positive electrode plate, the positive electrode material is a material with the positive electrode current collector removed from the positive electrode plate. The positive electrode current collector may be formed similarly to the negative electrode current collector, and can be formed by casting lead or a lead alloy or processing a lead or lead alloy sheet.

The clad-type positive electrode plate includes a plurality of porous tubes, a spine inserted into each tube, a positive electrode material with which a spine inserted tube is filled, and a joint that joins the plurality of tubes. In the clad-type positive electrode plate, the positive electrode material is a material with the tube, the spine, and the joint removed from the positive electrode plate.

As a lead alloy used for the positive electrode current collector, a Pb-Ca-based alloy and a Pb-Ca-Sn-based alloy are preferred in terms of corrosion resistance and mechanical strength. The positive electrode current collector may have a lead alloy layer with a different composition, and a plurality of alloy layers may be provided. It is preferable to use a Pb-Ca-based alloy or a Pb-Sb-based alloy for the spine.

The positive electrode material contains a positive active material (lead dioxide or lead sulfate) that develops a capacity through an oxidation-reduction reaction. The positive electrode material may contain other additives if necessary.

A non-chemically converted paste-type positive electrode plate is obtained in such a manner that a positive electrode current collector is filled with a positive electrode paste, which is then cured and dried, according to the case of the negative electrode plate. Thereafter, a non-chemically converted positive electrode plate is chemically converted. The positive electrode paste is prepared by kneading lead powder, an additive, water, and sulfuric acid.

A clad-type positive electrode plate is formed by filling a spine inserted tube with lead powder or slurry-like lead powder, and joining a plurality of tubes with a joint.

(Electrolyte solution)

An aqueous solution containing sulfuric acid is used as the electrolyte solution. The electrolyte solution may be gelled if necessary.

The electrolyte solution may contain an additive used for a lead-acid battery, if necessary. The additives also include, for example, metal salts (sodium salts such as sodium sulfate and aluminum salts such as aluminum sulfate).

The specific gravity at 20°C of the electrolyte solution in a fully charged lead-acid battery after chemical conversion is, for example, 1.10 $g/cm^3$ or more and 1.35 $g/cm^3$ or less.

Fig. 1 shows an external view of an example of a lead-acid battery according to an embodiment of the present invention.

A lead-acid battery 1 includes a container 12 storing an electrode group 11 and an electrolyte solution (not shown). The inside of the container 12 is partitioned into a plurality of cell chambers 14 by partitions 13. In each cell chamber 14, one electrode group 11 is stored. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging gas generated in the cell chamber 14 to the outside of the battery.

The electrode group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, the negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode groups 11 of the adjacent cell chambers 14 in series.

[Example]

Hereinafter, the present invention will be specifically described based on examples and comparative examples, but the present invention is not limited to the following examples.

<<Lead-acid batteries A1-1 to A1-34>>

(1) Preparation of negative electrode plate

A negative electrode paste was obtained by mixing lead powder, water, diluted sulfuric acid, graphite particles, carbon black, and an organic expander. A mesh of an expanded grid made of a Pb-Ca-Sn-based alloy as a negative electrode current collector was filled with the negative electrode paste, which was then cured and dried to obtain a non-chemically converted negative electrode plate. Sodium lignin sulfonate was used as the organic expander. The additive amount of the graphite particle was adjusted so that the contents thereof contained in 100% by mass of the negative electrode material was the value shown in Table 1, and the carbon black was then mixed into the negative electrode paste. The additive amounts of the carbon black and the organic expander were adjusted so that the contents thereof contained in 100% by mass of the negative electrode material were 0.3% by mass and 0.2% by mass, respectively. The carbon black and the organic expander were then mixed into the negative electrode paste. Each average particle size of the graphite particles was set to the value shown in Table 1. Both the content and the average particle size of the graphite particles in the table are values obtained by the above-described procedure from the produced lead-acid batteries. The content of the graphite particles is substantially the same as the additive amount of the graphite particles at the time of preparing the negative electrode paste. The average particle size of the graphite particles is substantially the same as the value obtained for the graphite particles before the negative electrode paste is prepared.

(2) Preparation of positive electrode plate

A positive electrode paste was prepared by mixing lead powder, water, and sulfuric acid. A mesh of an expanded grid made of a Pb-Ca-Sn-based alloy as a positive electrode current collector was filled with the positive electrode paste, which was then cured and dried to obtain a non-chemically converted positive electrode plate.

(3) Preparation of lead-acid battery

Each non-chemically converted negative electrode plate was stored into a bag-shaped separator formed using a polyethylene microporous film, and an electrode group was formed using seven non-chemically converted negative electrode plates and seven non-chemically converted positive electrode plates per cell. The separator has a first rib outside the bag and a second rib inside the bag. The separator was provided with a plurality of stripe-shaped first ribs and a plurality of second ribs, and the plurality of first ribs and the plurality of second ribs were formed along the height directions of the negative electrode plate and the positive electrode plate, respectively. The average height of the first rib was set to the value shown in Table 1, and the average thickness of the base of the separator was set to 0.2 mm. The total thickness of the separator corresponding to the total of the average heights of the first rib and the second rib and the average thickness of the base was set to 0.7 mm, and the average height of the second rib was changed in accordance with the average height of the first rib and the average thickness of the base. The pitch of the first ribs in the region facing the negative electrode plate was set to a value shown in Table 1, and the average pitch of the second ribs in the region facing the positive electrode plate was set to 1 mm. The average height of the ribs of the separator, the average thickness of the base, and the average pitch of the ribs are values obtained for the separator before the preparation of the lead-acid battery. However, those values are almost the same as values obtained by measurement preformed for the separator after the preparation of the lead-acid battery in the procedure described above.

The electrode group was inserted into a container made of polypropylene, the container was filled with an electrolyte solution, and chemical conversion was performed in the container, to assemble flooded-type lead-acid batteries A1-1 to A1-34 each having a nominal voltage of 12 V and a nominal capacity of 30 Ah (five-hour rate). A sulfuric acid aqueous solution having a specific gravity of 1.28 at 20°C was used as the electrolyte solution.

<<Lead-acid battery B1-1>>

A negative electrode plate was produced without using graphite particles. A bag-shaped separator having no first rib was used. Except for these, a lead-acid battery B1-1 was produced similarly to the lead-acid battery A1-1.

<<Lead-acid batteries B1-2 and B1-3>>

A bag-shaped separator having no first rib was used. The content, average particle size, and average aspect ratio of the graphite particles were set to the values shown in Table 1, respectively. Except for these, lead-acid batteries B1-2 and B1-3 were produced similarly to the lead-acid battery A1-1.

<<Lead-acid batteries B1-4 and B1-5>>

A negative electrode plate was produced without using graphite particles. The average height of the first ribs of the separator and the pitch of the first ribs in the region facing the positive electrode plate were set to the values shown in Table 1, respectively. Except for these, lead-acid batteries B1-4 and B1-5 were produced similarly to the lead-acid battery A1-1.

<<Lead-acid batteries B2-1 to B2-5>>

Each non-chemically converted positive electrode plate was stored in a bag-shaped separator. In the lead-acid batteries B2-1 to B2-3, the bag-shaped separator has a second rib inside. In the lead-acid batteries B2-4 to B2-5, the bag-shaped separator has a second rib inside the bag and a first rib outside the bag. Except for these, the lead-acid batteries B2-1 to B2-5 were produced similarly to the lead-acid batteries B1-1 to B1-5. Note that

<<Lead-acid batteries A2-1 to A2-12>>

Each non-chemically converted positive electrode plate was stored in a bag-shaped separator. The bag-shaped separator has a second rib inside the bag and a first rib outside the bag. Except for these, lead-acid batteries A2-1 to A2-12 were produced similarly to the lead-acid batteries A1-1 to A1-4, A1-13 to A1-16, and A1-25 to A1-28, respectively.

[Evaluation: PSOC life performance]

The lead-acid battery was charged and discharged under the idling stop condition in accordance with SBAS 0101: 2014. Specifically, (a) to (c) below were repeated as one cycle at 25°C until the discharge end voltage became 7.2 V or less, and the number of cycles at this time was obtained. The PSOC life performance was evaluated by the ratio when the number of cycles in the lead-acid battery B1-1 was set to 100. At the time of charge and discharge, the operation was suspended for 40 to 48 hours every 3600 cycles.

(a) Discharge 1: discharge is performed at a current value of 32 A for 59 seconds.
(b) Discharge 2: discharge is performed at a current value of 300 A for one second.
(c) Charge: charge is performed at a limited current of 100 A and a voltage of 14.0 V for 60 seconds.

Tables 1 and 2 show the evaluation results.

[Table 1]

| | Separator | | | Graphite particles | | PSOC life performance (%) |
|---|---|---|---|---|---|---|
| | First rib average height (mm) | First rib average pitch (mm) | Pole wrapped | Content (% by mass) | Average particle size ($\mu$m) | |
| B1-1 | - | - | Negative electrode plate | 0 | - | 100 |
| B1-2 | - | - | Negative electrode plate | 0.5 | 5 | 105 |
| B1-3 | | | | 3 | 500 | 105 |

(continued)

| | Separator | | | Graphite particles | | PSOC life performance (%) |
|---|---|---|---|---|---|---|
| | First rib average height (mm) | First rib average pitch (mm) | Pole wrapped | Content (% by mass) | Average particle size ($\mu$m) | |
| B1-4 | 0.06 | 0.3 | Negative electrode plate | 0 | - | 105 |
| B1-5 | 0.25 | 10 | | | | 105 |
| A1-1 | 0.06 | 0.3 | Negative electrode plate | 0.2 | 5 | 140 |
| A1-2 | | | | | 50 | 150 |
| A1-3 | | | | | 300 | 150 |
| A1-4 | | | | | 500 | 135 |
| A1-5 | 0.06 | 0.3 | Negative electrode plate | 3 | 5 | 140 |
| A1-6 | | | | | 50 | 150 |
| A1-7 | | | | | 300 | 150 |
| A1-8 | | | | | 500 | 135 |
| A1-9 | 0.06 | 10 | Negative electrode plate | 0.2 | 5 | 140 |
| A1-10 | | | | | 500 | 135 |
| A1-11 | 0.06 | 10 | Negative electrode plate | 3 | 5 | 140 |
| A1-12 | | | | | 500 | 135 |
| A1-13 | 0.1 | 1 | Negative electrode plate | 1 | 5 | 150 |
| A1-14 | | | | | 50 | 160 |
| A1-15 | | | | | 300 | 160 |
| A1-16 | | | | | 500 | 145 |
| A1-17 | 0.25 | 0.3 | Negative electrode plate | 0.2 | 5 | 145 |
| A1-18 | | | | | 500 | 140 |
| A1-19 | 0.25 | 0.3 | Negative electrode plate | 3 | 5 | 145 |
| A1-20 | | | | | 500 | 150 |
| A1-21 | 0.25 | 10 | Negative electrode plate | 0.2 | 5 | 145 |
| A1-22 | | | | | 50 | 150 |
| A1-23 | | | | | 300 | 150 |
| A1-24 | | | | | 500 | 140 |
| A1-25 | 0.25 | 10 | Negative electrode plate | 3 | 5 | 145 |
| A1-26 | | | | | 50 | 150 |
| A1-27 | | | | | 300 | 150 |
| A1-28 | | | | | 500 | 140 |

(continued)

| | Separator | | | Graphite particles | | PSOC life performance (%) |
|---|---|---|---|---|---|---|
| | First rib average height (mm) | First rib average pitch (mm) | Pole wrapped | Content (% by mass) | Average particle size ($\mu$m) | |
| A1-29 | 0.05 | 0.3 | Negative electrode plate | 0.2 | 5 | 120 |
| A1-30 | 0.06 | 0.2 | | | | 120 |
| A1-31 | 0.3 | 10 | | 3 | 300 | 125 |
| A1-32 | 0.25 | 12 | | | | 125 |
| A1-33 | 0.06 | 0.3 | | 5 | 300 | 125 |
| A1-34 | 0.25 | 10 | | | | 125 |

[Table 2]

| | Separator | | | Graphite particles | | PSOC life performance (%) |
|---|---|---|---|---|---|---|
| | First rib average height (mm) | First rib average pitch (mm) | Pole wrapped | Content (% by mass) | Average particle size ($\mu$m) | |
| B2-1 | - | - | Positive electrode plate | 0 | - | 105 |
| B2-2 | - | - | Positive electrode plate | 0.5 | 5 | 110 |
| B2-3 | | | | 3 | 500 | 110 |
| B2-4 | 0.06 | 0.3 | Positive electrode plate | 0 | - | 110 |
| B2-5 | 0.25 | 10 | | | | 110 |
| A2-1 | 0.06 | 0.3 | Positive electrode plate | 0.2 | 5 | 150 |
| A2-2 | | | | | 50 | 155 |
| A2-3 | | | | | 300 | 155 |
| A2-4 | | | | | 500 | 145 |
| A2-5 | 0.1 | 1 | Positive electrode plate | 1 | 5 | 160 |
| A2-6 | | | | | 50 | 170 |
| A2-7 | | | | | 300 | 170 |
| A2-8 | | | | | 500 | 150 |
| A2-9 | 0.25 | 10 | Positive electrode plate | 3 | 5 | 155 |
| A2-10 | | | | | 50 | 160 |
| A2-11 | | | | | 300 | 160 |
| A2-12 | | | | | 500 | 145 |

As shown in Tables 1 and 2, in the case of using the separator having no first rib, even when graphite particles are added to the negative electrode material, the PSOC life performance is improved only by 5% (comparison of lead-acid battery B1-1 with B1-2 and B1-3 and comparison of B2-1 with B2-2 and B2-3). In addition, even with the use of the separator having the first rib, when the graphite particles are not contained, the PSOC life performance is improved only by 5% (comparison of the lead-acid battery B1-1 with B1-4 and B1-5 and comparison of B2-1 with B2-4 and B2-5).

In contrast, when the negative electrode material containing graphite particles is combined with the separator having the first rib, the PSOC life performance has been remarkably improved as compared to the case where either one is used. Specifically, when the negative electrode plate is wrapped with the separator, the PSOC life performance is improved by 15% to 55% (comparison between the lead-acid batteries B1-2 to B1-4 and the lead-acid batteries A1-1 to A1-34), and when the positive electrode plate is wrapped with the separator, the PSOC life performance is also improved by 35% to 55% (comparison between the lead-acid batteries B2-2 to B2-4 and the lead-acid batteries A2-1 to A2-12).

Higher PSOC life performance can be obtained when the positive electrode plate is wrapped than when the negative electrode plate is wrapped with the separator.

When the average particle size of the graphite particles is 50 pm or more and 300 pm or less, higher PSOC life performance can be obtained.

INDUSTRIAL APPLICABILITY

The lead-acid battery according to one aspect of the present invention is applicable to a valve regulated, flooded-type lead-acid battery. The lead-acid battery can be suitably used as a charge-discharge application under PSOC conditions, for example, a deep cycle battery or a cycle use battery, and particularly useful as a lead-acid battery for charge control or a lead-acid battery for IS. Further, the power supply may be used as a power supply for starting an automobile or a motorcycle in addition to an emergency or backup power supply.

DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole
11: electrode group
12: container
13: partition
14: cell chamber
15: lid
16: negative electrode terminal
17: positive electrode terminal
18: vent plug

**Claims**

1.  A lead-acid battery comprising:

    a positive electrode plate;
    a negative electrode plate;
    a separator interposed between the positive electrode plate and the negative electrode plate; and
    an electrolyte solution,
    wherein
    the separator includes a first rib on the negative electrode plate side and a second rib on the positive electrode plate side,
    an average height of the first rib is 0.05 mm or more and 0.40 mm or less,
    an average height of the second rib is 0.3 mm or more and 1.0 mm or less,
    the negative electrode plate contains a negative electrode material, and
    the negative electrode material contains graphite particles.

2.  The lead-acid battery according to claim 1, wherein the separator has a region in which an average of pitches between each of the first ribs is 0.2 mm or more and 12 mm or less.

3. The lead-acid battery according to claim 1 or 2, wherein an average particle size of the graphite particles is 50 pm or more and 300 pm or less, wherein the average particle size of the graphite particles is obtained from a volume-based particle size distribution measured using a laser diffraction/scattering type particle size distribution measuring device measured in a state where the dried graphite particles are dispersed in water.

4. The lead-acid battery according to any one of claims 1 to 3,
wherein a content of the graphite particles in the negative electrode material is 0.2% by mass or more and 3% by mass or less.

5. The lead-acid battery according to any one of claims 1 to 4,
wherein the separator has a bag shape and stores the positive electrode plate.

6. The lead-acid battery according to any one of claims 1 to 5,
wherein the separator has a bag shape and stores the negative electrode plate.

**Patentansprüche**

1. Bleiakkumulator, umfassend:

eine Positivelektrodenplatte;
eine Negativelektrodenplatte;
einen Separator, eingefügt zwischen der Positivelektrodenplatte und der Negativelektrodenplatte; und
eine Elektrolytlösung,
wobei
der Separator eine erste Rippe auf der Negativelektrodenplattenseite und eine zweite Rippe auf der Positivelektrodenplattenseite umfasst,
eine mittlere Höhe der ersten Rippe 0,05 mm oder mehr und 0,40 mm oder weniger beträgt,
eine mittlere Höhe der zweiten Rippe 0,3 mm oder mehr und 1,0 mm oder weniger beträgt,
die Negativelektrodenplatte ein Negativelektrodenmaterial enthält und
das Negativelektrodenmaterial Graphitpartikel enthält.

2. Bleiakkumulator nach Anspruch 1, wobei der Separator einen Bereich aufweist, in dem ein Mittelwert der Abstände zwischen den einzelnen ersten Rippen 0,2 mm oder mehr und 12 mm oder weniger beträgt.

3. Bleiakkumulator nach Anspruch 1 oder 2, wobei eine mittlere Partikelgröße der Graphitpartikel 50 $\mu$m oder mehr und 300 $\mu$m oder weniger beträgt, wobei die mittlere Partikelgröße der Graphitpartikel erhalten wird aus einer volumenbasierten Partikelgrößenverteilung, gemessen unter Verwendung eines Partikelgrößenverteilungsmessgerätes vom Laserbeugungs-/Streuungstyp, gemessen in einem Zustand, wo die getrockneten Graphitpartikel in Wasser dispergiert sind.

4. Bleiakkumulator nach einem der Ansprüche 1 bis 3, wobei ein Anteil der Graphitpartikel in dem Negativelektrodenmaterial 0,2 Masse-% oder mehr und 3 Masse-% oder weniger beträgt.

5. Bleiakkumulator nach einem der Ansprüche 1 bis 4, wobei der Separator eine Taschenform aufweist und die Positivelektrodenplatte aufnimmt.

6. Bleiakkumulator nach einem der Ansprüche 1 bis 5, wobei der Separator eine Taschenform aufweist und die Negativelektrodenplatte aufnimmt.

**Revendications**

1. Batterie au plomb comprenant :

une plaque d'électrode positive ;

une plaque d'électrode négative ;
un séparateur posé entre la plaque d'électrode positive et la plaque d'électrode négative ; et
une solution d'électrolyte,
où
le séparateur comporte une première nervure sur le côté de la plaque d'électrode négative et une deuxième nervure sur le côté de la plaque d'électrode positive,
une hauteur moyenne de la première nervure est de 0,05 mm ou plus et de 0,40 mm ou moins,
une hauteur moyenne de la deuxième nervure est de 0,3 mm ou plus et de 1,0 mm ou moins,
la plaque d'électrode négative contient un matériau d'électrode négative,
et
le matériau d'électrode négative contient des particules de graphite.

2. Batterie au plomb selon la revendication 1, dans laquelle le séparateur comporte une région dans laquelle une moyenne des emplacements entre chacune des premières nervures est de 0,2 mm ou plus et de 12 mm ou moins.

3. Batterie au plomb selon la revendication 1 ou la revendication 2, dans laquelle une taille particulaire moyenne des particules de graphite est de 50 $\mu$m ou plus et de 300 $\mu$m ou moins, où la taille particulaire moyenne des particules de graphite est obtenue à partir d'une distribution de tailles particulaires basée sur le volume mesurée en utilisant un dispositif de mesure de distribution de tailles particulaires de type laser de diffraction/dispersion mesurée dans un état où les particules de graphite séchées sont dispersées dans de l'eau.

4. Batterie au plomb selon l'une quelconque des revendications 1 à 3, dans laquelle une teneur en particules de graphite dans le matériau d'électrode négative est de 0,2 % en masse ou plus et de 3 % en masse ou moins.

5. Batterie au plomb selon l'une quelconque des revendications 1 à 4, dans laquelle le séparateur a une forme de sac et loge la plaque d'électrode positive.

6. Batterie au plomb selon l'une quelconque des revendications 1 à 5, dans laquelle le séparateur a une forme de sac et loge la plaque d'électrode négative.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011142072 A